# EUROPEAN PATENT APPLICATION

(11) **EP 3 716 565 A1**
(43) Date of publication of application: **30.09.2020**
(21) Application number: 19165380.7
(22) Date of filing: 27.03.2019
(51) Int. Cl.: H04L 29/06, H04L 9/32, G06F 21/64

(54) **CONTROLLED DATA ACCESS IN A COMMUNICATION NETWORK**

(71) Applicant: Nokia Technologies Oy, 02610 Espoo (FI)
(72) Inventor: SCHOINIANAKIS, Dimitrios, 81541 Munich (DE); SIGNORINI, Matteo, 91120 Palaiseau (FR)
(74) Representative: Laine IP Oy

(57) **Abstract**

According to an example aspect of the present invention, there is provided a method comprising, transmitting information about a new file associated with a user device to a first blockchain, determining that an investigation associated with the user device has started, transmitting information to a private channel during the investigation and upon termination of the investigation, transmitting information about termination of the investigation to the first blockchain.

## Description

### FIELD

Embodiments of the present invention relate in general to communication networks and controlled data access in such networks.

### BACKGROUND

Privacy and data confidentiality have been gaining more and more attention recently. Typically users are concerned about such issues, because for them it would be extremely important to ensure that sensitive data, such as personal data related to a user of a device, would not be misused. Governmental agencies, e.g., law-enforcement agencies, on the other hand would need access to data associated with the users at least some times. For instance, a law-enforcement agency would require access to the data when a user of a device is a suspect in a criminal case. Therefore, controlled access to data should be enabled to ensure privacy of the users while meeting the requirements of the law-enforcement agencies. There is thus a need for providing improved methods, apparatuses and computer programs which allow accessing data that belongs to a user in a controlled manner by, for example, law-enforcement agencies, if needed.

### SUMMARY OF THE INVENTION

According to some aspects, there is provided the subject-matter of the independent claims. Some embodiments are defined in the dependent claims.

According to a first aspect, there is provided a method comprising, transmitting information about a new file associated with a user device to a first blockchain, determining that an investigation associated with the user device has started, transmitting information to a private channel during the investigation and upon termination of the investigation, transmitting information about termination of the investigation to the first blockchain.

According to the first aspect, the private channel may be a multisignature channel.

According to the first aspect, the first blockchain may be a publicly available blockchain and the private channel may be a private blockchain among network elements that participate in the investigation.

According to the first aspect, the method may further comprise generating a data key for the user device, transmitting the data key to the user device and upon transmitting the data key to the user device, deleting the data key and transmitting information about deletion of the data key to the first blockchain.

According to the first aspect, the method may further comprise receiving a request to start the investigation, transmitting an authorization in response to the request and upon authorizing the investigation, transmitting a share of a data key associated with the user device.

According to the first aspect, the method may further comprise determining that the investigation is not following rules of the investigation and terminating the investigation by transmitting the information about termination of the investigation to the first blockchain in response to the determination.

According to the first aspect, the method may further comprise transmitting information about the start of the investigation to the first blockchain upon determining that the investigation has started.

According to a second aspect of the present invention, there is provided an apparatus comprising at least one processing core, at least one memory including computer program code, at least one memory and the computer program code being configured to, with the at least one processing core, cause the apparatus at least to perform the method.

According to a third aspect of the present invention, there is provided an apparatus comprising means for performing the method.

According to a fourth aspect of the present invention, there is provided non-transitory computer readable medium having stored thereon a set of computer readable instructions that, when executed by at least one processor, cause an apparatus to at least perform the method.

According to a fifth aspect of the present invention, there is provided a computer program configured to perform the method.

### BRIEF DESCRIPTION OF THE DRAWINGS

FIGURE 1 illustrates a network scenario in accordance with at least some embodiments of the present invention;
FIGURE 2 illustrates a signalling diagram in accordance with at least some embodiments of the present invention;
FIGURE 3 illustrates a process in accordance with at least some embodiments of the present invention;
FIGURE 4 illustrates an example apparatus capable of supporting at least some embodiments of the present invention; and
FIGURE 5 illustrates a flow graph of a method in accordance with at least some embodiments of the present invention.

### EMBODIMENTS

Embodiments of the present invention relate to controlled data access in a communication network. More specifically, embodiments of the present invention make it possible, e.g., for law-enforcement agencies to access data associated with a user if needed for an investigation related to a crime for example. At the same time the access may be controlled, e.g., by a service provider to ensure that the data associated with the user is not misused. Also, after the investigation information about the investigation may be publicly available, thereby enabling public awareness, even though said information would not be publicly available during the investigation.

Embodiments of the present invention may be exploited in various contexts but as an example, privacy and data confidentiality have been a hot topic in discussions between governmental agencies and service providers recently. Service providers typically would like to protect the data of the users and in extreme cases even deny a possibility for data decryption in criminal cases. On the other hand, governmental agencies would like to be able to decrypt data, if needed. There is hence a need for enabling controlled access to data so that privacy of the users can be ensured while making it possible for governmental agencies to access the data in criminal cases.

Therefore, embodiments of the present invention preserve user privacy while allowing processing of data related to suspicious users. For instance, public control is enabled for detecting misuse of the data, e.g., by governmental agencies such as law-enforcement agencies or justice authorities, and to avoid mass surveillance. At the same time, access to data is enabled, when needed and authorized.

In some embodiments of the present invention, the above mentioned challenges are addressed by making it possible for a service provider to control access to data of users. For instance, a law-enforcement agency may need to transmit a request to start an investigation and the service provider may decide whether to authorize the investigation, or not. Also, the information about the start and/or termination of the investigation may be made public by transmitting said information to a first, publicly available blockchain, thereby enhancing public awareness and avoiding misuse. On the other hand, during the investigation information may be transmitted to a private local channel (private blockchain) in order to enable non-public exchange of information.

In general, blockchains may be applied for recording transactions without relying to a centralized entity. Changes in resource ownership in a blockchain network take the form of blockchain transactions secured by strong cryptography. Information provided in a blockchain transaction may be stored as a new block in the blockchain in response to validation of the respective blockchain transaction. Blockchain state information shared by the nodes may store all transactions and history carried out in the blockchain network. Application of blockchain technology may enable a way to track the unique history of transactions by the individual nodes in the network. Modifying transaction data stored in a blockchain is very difficult, since as the chain lengthens, the data is left ever deeper in the blockchain.

Blockchains may be used to provide a completely auditable log that includes every single transaction ever done in a blockchain network, which may be very useful in a number of use cases. However, due to this nature, scalability of blockchains is affected by their ever-growing size due to new transactions.

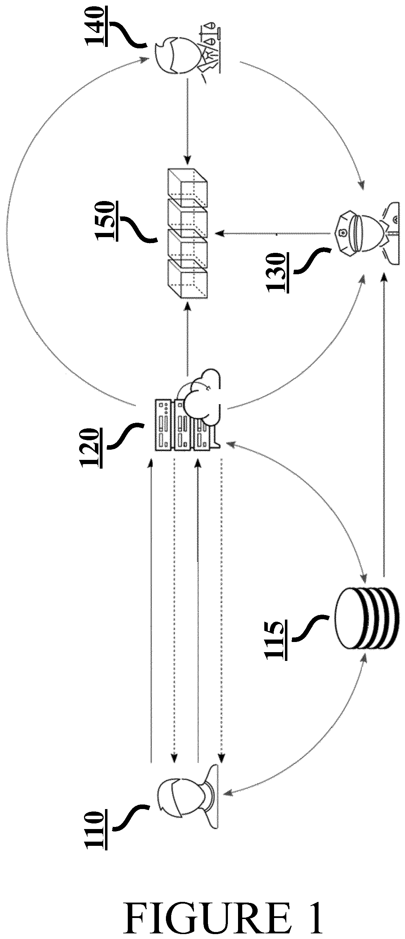

FIGURE 1 illustrates a network scenario in accordance with at least some embodiments of the present invention. As shown in FIGURE 1, the network scenario may comprise user device 110, such as, for example, a user equipment, mobile phone, tablet, a personal computer or any other user device. In addition, the network scenario may comprise cloud storage service 115, which may be connected, at least temporarily, to user device 110. The network scenario may also comprise first network element 120, which may be connected, at least temporarily, to device 110. In general, first network element 120 may be referred to as a service provider, such as a cloud provider. In some embodiments, first network device 120 may be referred to as a Key Management Infrastructure, KMI. The KMI may be associated with the service provider. In some embodiments, the KMI and the service provider may be in the same network element.

First network element 120 may be connected to second network element 130 and third network element 140. In some embodiments second network element 130 may be associated with a law-enforcement agency or controlled by the law-enforcement agency. Alternatively, or in addition, in some embodiments third network element 140 may be associated with a justice authority or controlled by the justice authority.

First network element 120, second network element 130 and third network element 140 may be participants in first blockchain 150. That is to say, first network element 120, second network element 130 and third network element 140 may be able to transmit information to first blockchain 150. In some embodiments, first blockchain 150 may be a publicly available blockchain.

Similarly, first network element 120, second network element 130 and third network element 140 may be participants in a private channel (not shown in FIGURE 1). That is to say, first network element 120, second network element 130 and third network element 140 may be able to transmit information to a private channel as well. In some embodiments, a private channel may be a private blockchain among network elements that participate in an investigation, i.e., among first network element 120, second network element 130 and third network element 140.

In some embodiments of the present invention, user device 110 may connect to first network element 120, such as a cloud service provider, and establish a master key for example via the KMI associated with first network element 120. First network element 120, or the KMI associated with first network element 120, may generate an identity for the master key and return to user device 110 only the identity of the master key, thereby improving security because the master key is not transmitted from first network element 120, or the KMI associated with first network element 120, to anyone.

Moreover, in some embodiments, user device 110 may transmit a request to first network element 120, or the KMI associated with first network element 120, for a data key (associated with the received identity of the master key). First network element 120, or the KMI associated with first network element 120, may match the received identity of the master key to the master key itself and generate the data key, using this master key. First network element 120, or the KMI associated with first network element 120, may also compute an encrypted version of the data key by encrypting the data key with the master key. Then, first network element 120, or the KMI associated with first network element 120, may transmit the data key and the encrypted version of the data key to user device 110.

User device 110 may encrypt a file comprising data using the received data key and transmit the encrypted file/data along with the encrypted version of the data key to cloud service storage 115. User device 110 may delete the data key immediately after the transmission.

Upon generating the data key, first network element 120, or the KMI associated with first network element 120, may split the data key into three shares using any cryptographic Secret Sharing Scheme, SSS, and transmit a first share of the secret to second network element 130 and a second share of the secret to third network element 140. First network element 120, or the KMI associated with first network element 120, may keep a third share of the secret.

Thus, in some embodiments, a 3-out-of-n SSS scheme may be employed, wherein all three shares are needed for reconstructing the data key. First network element 120, or the KMI associated with first network element 120, may also record distribution of the shares by transmitting an indication to first blockchain 150, to achieve non-deniability of the distribution of the shares.

In some embodiments, SSS may be based on the Chinese Remainder Theorem, CRT, although any SSS may be employed in general. Said SSS may be considered as a cryptographic protocol which enables sharing of a valuable secret to different stakeholders, such as network elements 120, 130 and 140. Each stakeholder may obtain only a portion of the secret, however, it may be impossible to retrieve the full secret using only one portion of the secret.

If a new investigation concerning user device 110 starts, first network element 120, second network element 130 and third network element 140 may agree to handle information exchange during the investigation using a private channel, assuming all network elements 120, 130 and 140 agree on legitimacy and handling of the investigation. Upon agreeing on legitimacy and handling, network elements 120, 130 and 140 may exchange the shares with each other and record exchange of the shares to first blockchain 150.

For instance, if second network element 130 initiated the investigation, second network element 130 may reconstruct the data key using the first share of the data key, a second share of the data key received from third network element 140 and a third share of the data key received from first network element 120. Thus, second network element 130 may decrypt data associated with user device 110 using the reconstructed data key. Upon terminating the investigation, information about termination of the investigation may be transmitted to first blockchain 150.

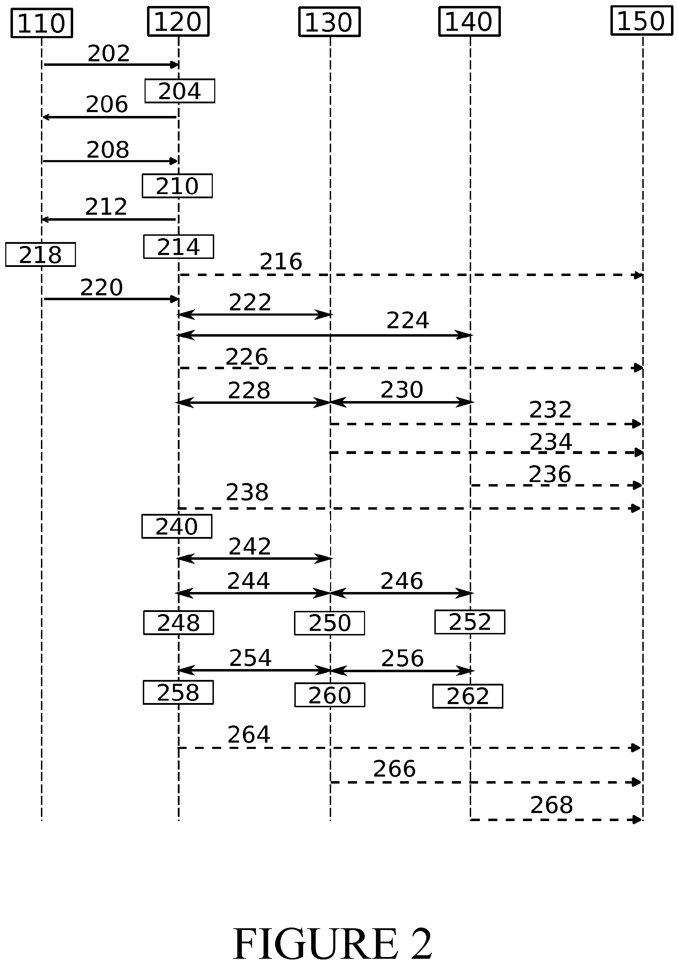

FIGURE 2 illustrates a signalling diagram in accordance with at least some embodiments of the present invention. Messages transmitted to first blockchain 150, i.e., to a public blockchain, are denoted by dashed lines in FIGURE 2 and unicast messages, i.e., messages transmitted to a certain destination, are denoted by solid lines. On the vertical axes are disposed, from the left to the right, user device 110, first network element 120, second network element 130, third network element 140 and first blockchain 150 of FIGURE 1. Time advances from the top toward the bottom.

In the beginning of the process of FIGURE 2, user device 110 may transmit, at step 202, a request to create a master key to first network element 120, such as a cloud service provider. Upon receiving the request to create the master key, first network element 120 may generate, at step 204, the master key for a file of user device 110. First network element 120 may also generate an identity of the master key and a moduli-set that constitutes a basis for a secret sharing scheme, such as CRT SSS, {m_1, m_2, ... m_n} at step 204. After step 204, first network node 120 may respond to the request to create the master key by transmitting to user device 110, at step 206, an acknowledgement comprising the identity of the master key.

Subsequently, at step 208, user device 110 may request a data key for the identity of the master key. First network element 120 may then, at step 210, generate the data key using the master key and generate an encrypted version of the data key using the master key as an encryption key. First network element 120 may also compute, at step 210, three shares of the data key with the use of the SSS. First network element may then, at step 212, transmit the data key and the encrypted version of the data key to user device 110. First network element 110 may delete, at step 214, the data key immediately after transmitting the data key and the encrypted version of the data key to user device 110, for security reasons.

After step 214, first network element may transmit, at step 216, information about deletion of the data key to first blockchain 150. That is to say, first network element may publish information about deletion of the data key to first blockchain 150.

Upon receiving the data key and the encrypted version of the data key, user device 110 may, at step 218, encrypt at least one file using the data key. After the encryption, user device may also delete, at step 218, the data key. User device 110 may, at step 220, transmit a message to first network element 120, the message comprising the at least one encrypted file along with the encrypted version of the data key.

Upon receiving the at least one encrypted file, first network element 120 may compute hashes of the shares of the data key. At step 222, first network element 110 may transmit a first share along with a hash of the first share to second network element 130, such as a law-enforcement agency. The transmission may also comprise the identity of the master key. Consequently, second network element 130 may sign the hash of the first share and acknowledge, at step 222, reception of the first share.

Similarly, first network element 120 may transmit, at step 224, a second share along with a hash of the second share to third network element 140, such as a justice authority. The transmission may also comprise the identity of the master key. Consequently, third network element 130 may sign the hash of the second share and acknowledge, at step 224, reception of the second share. At step 226, first network element 120 may transmit information to first blockchain 150, said information indicating that a new file associated with user device 110 has been uploaded. The information may also comprise the identity of the master key along with acknowledgements from second network element 130 and third network element 140.

In other words, both, second network element 130 and third network element 140, may need to acknowledge reception of their shares by calculating their own hash over the received shares and also sign their hashes. Second network element 130 and third network element 140 are hence prevented from disputing reception of the shares. Also, second network element 130 and third network element 140 may prove that they have received their shares in case first network element 120 denies transmission of the shares

According to some embodiments, such a scheme (SSS with CRT) may be utilized so that first network element 120 may share the data key with second network element 130 and third network element 140 with a property that none of the stakeholders participating in the SSS can reconstruct the data key using only their own or two shares. Thus, the stakeholders need to collude, preferably in a regulated manner. For this, first network element 120 may exploit the moduli-set generated at step 204, to define the moduli-set required by the CRT-SSS (relatively co-prime integers) and create the shares of the data key at step 210.

At step 228, second network element 130 may transmit a request, to start an investigation associated with user device 110, to first network element 120. Similarly, second network element 130 may transmit, at step 230, a request to start the investigation associated with user device 110, to third network element 140. For instance, a law-enforcement agency may want to investigate data related to a suspect and hence transmit the request to start the invention to a justice department and a cloud service provider. First network element 120 and third network element 140 may transmit an authorization in response to the request at steps 228 and 230, respectively.

A local private channel among network elements 120, 130 and 140, may be created after the authorizations, for exchanging information locally during the investigation. The private channel may be a multisignature account on first blockchain 150 used to communicating off-chain by signing each new message.

The private channel makes it impossible to create a new status of the multisignature account if all involved parties, such as network elements 120, 130 and 140, do not sign the new status. Moreover, if one of the involved parties updates first blockchain 150 with an old status, any of the involved parties may publish the new status, thereby trumping, or beating, all the previously published status updates. In addition, there is no need to wait for any of the involved parties to complain about the investigation, because as soon as any of the involved parties stops signing new status updates, the investigation may immediately and automatically end. New actions signed by only some of the involved parties of the private channel, but not all, will not be accepted by a community of first blockchain 150.

By transmitting the authorizations, at steps 228 and 230, first network element 120 and third network element 140 authorize the investigation. Thus, second network element 130 may, at step 232, transmit information about initiation of the investigation to first blockchain 150. Note that if for some reason one of the authorities does not grant authorization, the local private channel does not reach a consensus, thus the public blockchain 150 is not updated (remains open) and so the investigation is cancelled.

Moreover, at step 234, second network element 130 may transmit information about creation of the private channel, to first blockchain 150. That is to say, second network element 130 may transmit/publish information about creation of the private channel at step 234. Similarly, third network element 140 and first network element 120 may transmit information about creation of the multisignature accounts to first blockchain 150, at steps 236 and 238, respectively. After these steps, the investigation may be considered as legally started, i.e., determined as started.

At step 240, first network element 120 may lock the status of the at least one file associated with user device 110 along with the data key and the master key to avoid recreation of the master key by user device 110, i.e., a suspect, thereby rendering the data key useless. Upon authorizing the investigation, first network element 120 may, at step 242, transmit the moduli-set with a nonce to second network element 130 and second network element 130 may acknowledge reception.

At step 244, first network element 120 may transmit its share to second network element 130 and second network element 130 may respond by acknowledging reception of the share. Similarly, at step 246, third network element 140 may transmit its share to second network element 130 and second network element 130 may respond by acknowledging reception of the share.

First network element 120, second network element 130 and third network element 140 may, at steps 248, 250 and 252, respectively, update the status of the local channel by transmitting information indicating that the shares have been exchanged to the private channel. At step 250, second network element 130 may reconstruct the data key and encrypt the at least one file associated with user device 110.

As the investigation is ongoing after step 250 (decryption), second network element 130 may propose an action to take at steps 254 and 256. The action to be taken may be for example an arrest warrant or request for more data. First network element 120 and third network element 140 may also acknowledge the action at steps 254 and 256, respectively. This provides means for controlling the processing of data associated with user device 110 and the investigation process in general. For example, first network element 120, such as a cloud service provider, may deny updating the private channel if a misbehaviour of second network element 130, such as a law enforcement agency, is noticed.

Again, first network element 120, second network element 130 and third network element 140 may, at steps 258, 260 and 262, respectively, update the status of the local private channel by transmitting information denoting an agreement on the actions proposed by third network element 130. However, if any of network elements 120, 130 and 140 does not update the status, the local channel cannot be closed and the investigation is invalidated. Thus, actions of second network element 130 may be controlled.

In case that one of network elements 120, 130 and 140 would like to update the status of the private channel or if the investigation is terminated, first network element 120, second network element 130 and third network element 140 may, at steps 264, 266 and 268, respectively, need to transmit information to first blockchain 150. In case of terminating the investigation, the information about termination of the investigation may be transmitted to first blockchain 150 in response to the determining that the investigation is not following rules of the investigation.

Since the private channel is off-chain (i.e. for transmitting direct peer-to-peer messages) from first blockchain 150, the messages transmitted to the private channel are kept offline from first blockchain 150 until a new status update is transmitted to first blockchain 150. Thus, the involved parties of private channel are allowed to keep secrecy of the investigation among them as long as needed and desirable.

However, as soon as the investigation comes to an end, the current status as well as all the actions that drove to it can be made public. This can be used to acknowledge user devices that their data has been decrypted due to an investigation and to allow them to contact the cloud provider and create a new master-ley key in case they are found to be innocent of charges. Without such an important feature, users' data might remain unlocked even after an investigation has been closed thus exposing them to possible data theft.

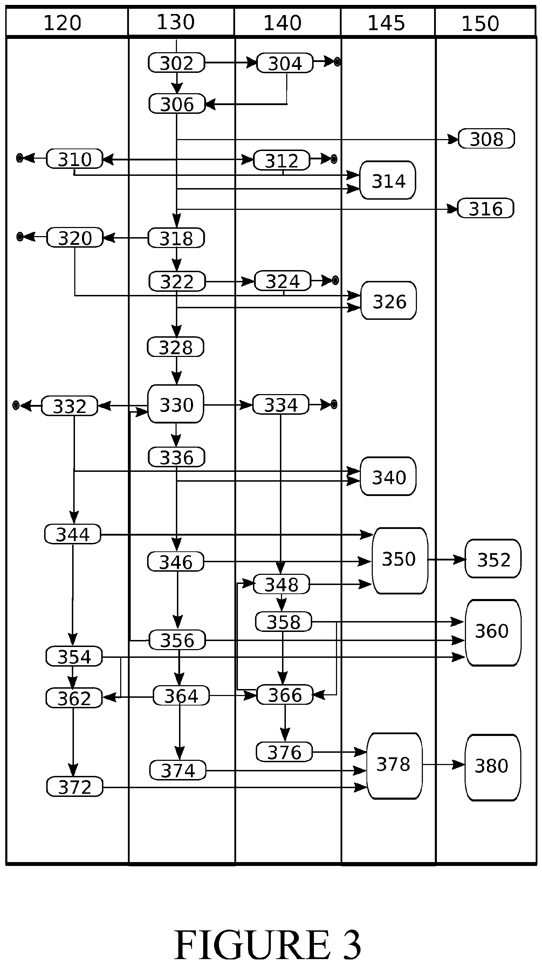

FIGURE 3 illustrates a process in accordance with at least some embodiments of the present invention. On the vertical axes are disposed, from the left to the right, user device 110, first network element 120, second network element 130, third network element 140 and first blockchain 150 of FIGURE 1. Also, private channel 145 is shown in FIGURE 2 (not shown in FIGURE 1).

In some embodiments, private channel 145 may be referred to as a state channel. In general, state channels may be seen as a way to think about blockchain interactions which could occur on the blockchain, but instead get conducted off of the blockchain, without significantly increasing the risk of any participants.

At step 302, second network element 130 may acquire a target for an investigation, such as user-device 110, and determine whether a warrant is required. If a warrant is required, second network element 130 may request third network element 140 to authorize the warrant at 304. If the warrant is not authorized, the investigation is rejected. If the warrant is authorized, second network element 130 may, at step 306, request a private channel 145 for the investigation. Also, second network element 130 may transmit information indicating the investigation is proposed to first blockchain 150, at step 308.

At step 310, first network element 120 may determine whether private channel 145 is agreed and if not, the investigation is aborted. In general, private channel 145 may be referred to as a multisignature account. If private channel 145 is created, first network element 120 may transmit information indicating that private channel 145 has been created at step 310. Third network element 140 may perform the same at step 312. Upon creating private channel 145 at step 314, second network element 130 may transmit information indicating that the investigation has started to first blockchain 150 at step 316. Consequently, all network elements 120, 130 and 140 may determine that the investigation has started.

At step 318, second network element 130 may request a moduli and shares from first network element 110. At step 320, first network element 120 may decide to abort the investigation. However, if first network element 120 decides that the investigation should not be aborted, first network element 120 may, at step 320, exchange the share and transmit information about the exchange to private channel 145. Similarly, at step 322, second network element 130 may request a share from third network element 140. If third network element 140 decides not to exchange the share, third network element 140 may abort the investigation. However, if third network element 140 exchanges the share, third network element 140 may transmit information about the exchange to private channel 145. Also, second network element may transmit information indicating that the shares have been exchanged to private channel 145 at step 326.

At step 328, second network element 130 may reconstruct the data key. At step 330, second network element 130 may request for a data decryption. If the action is refused, first network element 120 or third network element 140 may decide to abort the investigation at steps 332 and 334, respectively. If the investigation is not aborted, first network element 120 or third network element 140 may transmit information to private channel 145 indicating that the data has been decrypted.

At step 336, second network element 130 may analyse the data. At step 340, information indicating that the data has been decrypted may be transmitted to private channel 145. At steps 342, 344 and 348, network elements 120, 130 and 140 may determine that the investigation is not following rules and transmit information indicating that to private channel 145. At step 350, private channel 145 may be updated and closed, and a new transaction concerning aborting the investigation may be transmitted to first blockchain at step 352. The investigation may be consequently aborted.

At steps 354, 356 and 356, network elements 120, 130 and 140 may decide that there is some information to be publicly disclosed concerning the investigation and transmit the information to first blockchain 150. New transaction, i.e., the information to be publicly disclosed may be recorded to first blockchain at step 360.

At steps 362, 364 and 366, network elements 120, 130 and 140 may determine whether the investigation is on-going or should be terminated. If it is determined that the investigation is to be terminated, at steps 372, 374 and 376, network elements 120, 130 and 140 may decide to close the investigation and close private channel 145 at step 378. Network elements 120, 130 and 140 may thus transmit information about termination of the investigation to first blockchain 150 in response to the determination. At step 380, new transaction, i.e., the information about termination of the investigation, may be recorded to first blockchain 150. The investigation is thus ended.

At the end of the investigation, if it is concluded that the data reveals nothing about user device 110, i.e., the suspect, first network element 120 may individually and personally contact user device 110 to initiate a new key-establishment process (i.e., go back to step 202 in FIGURE 2).

Embodiments of the present invention solve various challenges. For instance, second network element 130 cannot deny that it has started the decryption process, because information indicating that the data has been decrypted may be transmitted to private channel 145. Also, second network element 130 cannot deny reception of the shares because it has to acknowledge the reception and information about the exchange of the shares is recorded in private channel 145. Second network element 130 cannot deny reception of the moduli-set as it has to acknowledge the reception and information about the exchange of the moduli-set is recorded in private channel 145. In addition, second network element 130 cannot delay the investigation as much as needed to invalidate the investigation, because first network element 120 and third network element 140 may check whether the investigation is following rules and if not, abort the investigation.

On the other hand, first network element 120 cannot deny that it has distributed the first and the second share, because information about distribution of the shares is transmitted to first blockchain 150. First network element 120 cannot serve as the holder of the keys either.

Content of private channel 145 may be made public upon terminating the investigation. That is to say, content of private channel 145 may be transmitted to first blockchain 150 to reveal the content after closing the investigation. However, second network element 130 may desire to keep content of the investigation hidden from user device 110 and in such a case network elements 120, 130 and 140 can agree to wait before terminating the investigation.

Making the blockchain public prohibits the assumption that the cloud provider is trusted in deleting the user key or in not reusing previous keys. That is to say, publication of users' keys makes it possible that everybody can recognize if a user device is using a previously used key without trusting a manufacturer in doing so.

Publicity of first blockchain 150 makes it possible for user device 110 to see that an investigation concerning user device 110, or data associated with user device 110, has started, so that user device 110 can change the password and/or require another key for his data from first network element 120, at least after the investigation.

According to some embodiments of the present invention, the whole content of the investigation is regulated since each single operation within the channel needs to be signed by all the participants. Moreover, the duration of the investigation, and private channel 145, is also under control of all network elements 120, 130 and 140.

In some embodiments of the present invention, SSS may be employed and hence the process does not depend solely on first network element 120. Key escrow may be strengthened as well, thereby avoiding a single point of failure. At least some embodiments of the present invention therefore provide an immutable and indisputable process, hence empowering trust in the legal/law-enforcement activities.

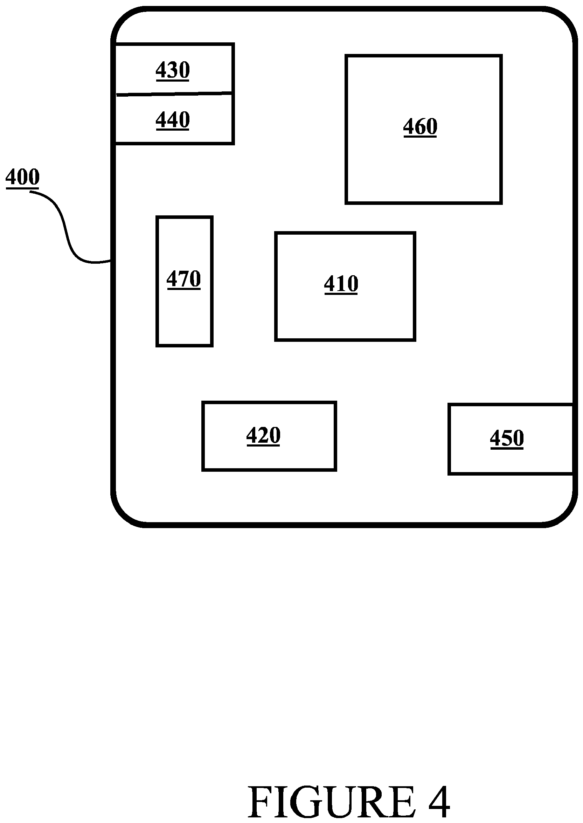

FIGURE 4 illustrates an example apparatus capable of supporting at least some example embodiments. Illustrated is device 400, which may comprise, for example, user device 110, second network element 130 or third network element 140, or a device controlling functioning thereof. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. A processing core may comprise, for example, a Cortex-A8 processing core manufactured by ARM Holdings or a Steamroller processing core produced by Advanced Micro Devices Corporation. Processor 410 may comprise at least one Qualcomm Snapdragon and/or Intel Atom processor. Processor 410 may comprise at least one application-specific integrated circuit, ASIC. Processor 410 may comprise at least one field-programmable gate array, FPGA. Processor 410 may be means for performing method steps in device 400. Processor 410 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular or non-cellular standard. Transmitter 430 may comprise more than one transmitter. Receiver 440 may comprise more than one receiver. Transmitter 430 and/or receiver 440 may be configured to operate in accordance with Global System for Mobile communication, GSM, Wideband Code Division Multiple Access, WCDMA, 5G/NR, Long Term Evolution, LTE, IS-95, Wireless Local Area Network, WLAN, Ethernet and/or Worldwide Interoperability for Microwave Access, WiMAX, standards, for example.

Device 400 may comprise a Near-Field Communication, NFC, transceiver 450. NFC transceiver 450 may support at least one NFC technology, such as Bluetooth, or similar technologies.

Device 400 may comprise User Interface, UI, 460. UI 460 may comprise at least one of a display, a keyboard, a touchscreen, a vibrator arranged to signal to a user by causing device 400 to vibrate, a speaker and a microphone. A user may be able to operate device 400 via UI 460, for example to accept incoming telephone calls, to originate telephone calls or video calls, to browse the Internet, to manage digital files stored in memory 420 or on a cloud accessible via transmitter 430 and receiver 440, or via NFC transceiver 450, and/or to play games.

Device 400 may comprise or be arranged to accept a user identity module 470. User identity module 470 may comprise, for example, a Subscriber Identity Module, SIM, card installable in device 400. A user identity module 470 may comprise information identifying a subscription of a user of device 400. A user identity module 470 may comprise cryptographic information usable to verify the identity of a user of device 400 and/or to facilitate encryption of communicated information and billing of the user of device 400 for communication effected via device 400.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. For example, where device 400 comprises a smartphone, it may comprise at least one digital camera. Some devices 400 may comprise a back-facing camera and a front-facing camera, wherein the back-facing camera may be intended for digital photography and the front-facing camera for video telephony. Device 400 may comprise a fingerprint sensor arranged to authenticate, at least in part, a user of device 400. In some example embodiments, device 400 lacks at least one device described above. For example, some devices 400 may lack a NFC transceiver 450 and/or user identity module 470.

Processor 410, memory 420, transmitter 430, receiver 440, NFC transceiver 450, UI 460 and/or user identity module 470 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the example embodiment various ways of interconnecting at least two of the aforementioned devices may be selected without departing from the scope of the example embodiments.

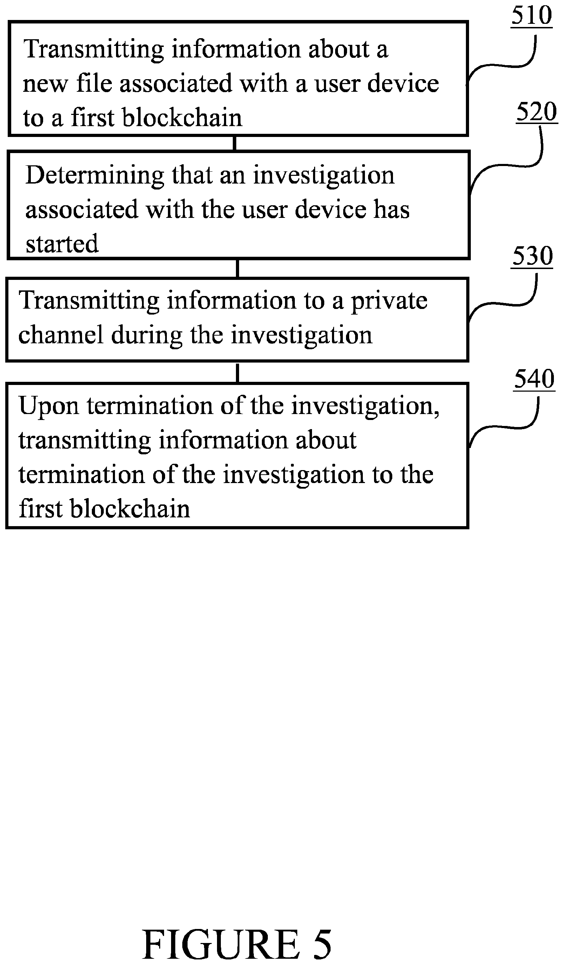

FIGURE 5 is a flow graph of a method in accordance with at least some embodiments of the present invention. The phases of the illustrated method may be performed by first network element 120 or by a control device configured to control the functioning thereof, possibly when installed therein.

The method may comprise, at step 510, transmitting information about a new file associated with a user device to a first blockchain. In addition, the method may comprise, at step 520, determining that an investigation associated with the user device has started. The method may also comprise, at step 530, transmitting information to a private channel during the investigation. Finally, the method may comprise, at step 540, transmitting information about termination of the investigation to the first blockchain upon termination of the investigation.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

In an exemplary embodiment, an apparatus, such as, for example, first network element 120, second network element 130 or third network element 140, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, first network element 120, second network element 130 or third network element 140, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in communication networks, wherein access to user devices needs to be enabled in a secure, controlled manner. For example, law-enforcement agencies and justice authorities may sometimes need a way to access a device in a communication network, but at the same time misuse of data associated with user devices can be avoided.

### ACRONYMS LIST

- CRT: Chinese Reminder Theorem
- KMI: Key Management Infrastructure
- SSS: Secure Secret Sharing

**REFERENCE SIGNS LIST**

| | |
|---|---|
| 110 | User device |
| 115 | Cloud storage service |
| 120 | First network element, e.g., service provider |
| 130 | Second network element, e.g., law-enforcement agency |
| 140 | Third network element, e.g., justice authority |
| 150 | First blockchain |
| 145 | Private channel |
| 202 -268 | Steps in FIGURE 2 |
| 302 - 380 | Steps in FIGURE 3 |
| 400 - 470 | Structure of the apparatus of FIGURE 4 |
| 510 - 540 | Phases of the method of FIGURE 5 |

## Claims

1. A method comprising:
- transmitting information about a new file associated with a user device to a first blockchain;
- determining that an investigation associated with the user device has started;
- transmitting information to a private channel during the investigation; and
- upon termination of the investigation, transmitting information about termination of the investigation to the first blockchain.

2. A method according to claim 1, wherein the private channel is a multisignature channel.

3. A method according to claim 1 or claim 2, wherein the first blockchain is a publicly available blockchain and the private channel is a private blockchain among network elements that participate in the investigation.

4. A method according to any of the preceding claims, further comprising:
- generating a data key for the user device;
- transmitting the data key to the user device; and
- upon transmitting the data key to the user device, deleting the data key and transmitting information about deletion of the data key to the first blockchain.

5. A method according to any of the preceding claims, further comprising:
- receiving a request to start the investigation;
- transmitting an authorization in response to the request; and
- upon authorizing the investigation, transmitting a share of a data key associated with the user device.

6. A method according to any of the preceding claims, further comprising:
- determining that the investigation is not following rules of the investigation; and
- terminating the investigation by transmitting the information about termination of the investigation to the first blockchain in response to the determination.

7. A method according to any of the preceding claims, further comprising:
- transmitting information about the start of the investigation to the first blockchain upon determining that the investigation has started.

8. An apparatus comprising:
- means for transmitting information about a new file associated with a user device to a first blockchain;
- means for determining that an investigation associated with the user device has started;
- means for transmitting information to a private channel during the investigation; and
- means for transmitting, upon termination of the investigation, information about termination of the investigation to the first blockchain.

9. An apparatus according to claim 8, wherein the private channel is a multisignature channel.

10. An apparatus according to claim 8 or claim 9, wherein the first blockchain is a publicly available blockchain and the private channel is a private blockchain among network elements that participate in the investigation.

11. An apparatus according to any of claims 8 - 10, further comprising:
- means for generating a data key for the user device;
- means for transmitting the data key to the user device; and
- means for deleting the data key and means for transmitting information about deletion of the data key to the first blockchain upon transmitting the data key to the user device.

12. An apparatus according to any of claims 8 - 11, further comprising:
- means for receiving a request to start the investigation;
- means for transmitting an authorization in response to the request; and
- means for transmitting, upon authorizing the investigation, a share of a data key associated with the user device.

13. An apparatus according to any of claims 8 - 12, further comprising:
- means for determining that the investigation is not following rules of the investigation; and
- means for terminating the investigation by transmitting the information about termination of the investigation to the first blockchain in response to the determination.

14. An apparatus according to any of claims 8 - 13, further comprising:
- means for transmitting information about the start of the investigation to the first blockchain upon determining that the investigation has started.

15. A computer program configured to cause a method in accordance with at least one of claims 1 - 7 to be performed.
